# EUROPEAN PATENT APPLICATION

(11) **EP 1 917 867 A1**
(43) Date of publication of application: **07.05.2008**
(21) Application number: 06122269.1
(22) Date of filing: 13.10.2006
(51) Int. Cl.: A23L 1/01, A23L 1/32, H05B 6/64

(54) **Method and package for cooking eggs in a microwave oven**

(71) Applicant: Koninklijke Philips Electronics N.V., 5621 BA Eindhoven (NL)
(72) Inventor: The designation of the inventor has not yet been filed
(74) Representative: Schoenmaker, Maarten

(57) **Abstract**

The invention relates to a method and package for cooking eggs in a microwave oven in a fast and simple manner. To this end one provides at least one egg with a covering surrounding the egg, which covering partially transmits and partially absorbs microwave radiation. Preferably the covering comprises a first component and a second component, wherein the second component partially transmits microwave radiation and partially absorbs microwave radiation.

## Description

### FIELD OF THE INVENTION

The present invention relates to a method and a package for cooking eggs in a microwave in a rapid manner. Furthermore the present invention relates to an egg provided with a package and to a microwave oven.

### BACKGROUND OF THE INVENTION

It is known that when accommodating an egg in a microwave oven without any shielding there is a good chance that the shell explodes before the egg is properly prepared. Preventing this by using a very lower power would take too much time. Eggs are traditionally prepared by supplying heat to a container filled with a hot liquid, such as boiling water. Generally it takes 3½ to 4 minutes to make a soft-boiled egg in this manner.

Methods for rapidly cooking eggs in a microwave oven that overcome the risk to exploding shells are known. EP0988795A1 describes a method wherein a waterproof container made from a microwave transparent material for receiving at least one egg is accommodated in a microwave oven. The eggs are either submerged in or water or sprayed with water, wherein the water is preheated. Preheating is obtained by an additional heating element, such as a heating wire.

A disadvantage of this known method is that in order to obtain a short cooking time one needs a container of pre-heated water. This means that one needs additional heating means, while a lot of water is pre-heated of which only a small part is effectively used for heating the eggs.

### SUMMARY OF THE INVENTION

It is an object of the present invention to provide a method for cooking eggs in a microwave oven that overcomes the abovementioned disadvantage.

Therefore the method according to the present invention comprises;
- providing at least one egg with a covering that surrounds the egg, which covering partially transmits microwave radiation and partially absorbs microwave radiation;
- accommodating the egg in a microwave oven;
- cooking the egg by means of the combined action of transmitted microwaves and heat conduction by the covering.

This method enables that one no longer needs any additional heating means to preheat the water. The covering can be made such that the part that conducts the heat is efficiently heated. The eggs are heated both directly by means of the microwave radiation that is being transmitted through the covering and indirectly by means of heat conduction from the covering to the eggs. The covering obviously will be heated also since it partially absorbs microwave radiation. It has appeared that the eggs can be cooked in a relatively short time. Experiments have indicated that soft-boiled eggs can be prepared in only 80 seconds. Compared to the method of EP0988795A1 an additional advantage is that one does not longer need any cumbersome and relatively large container filled with or sprayed with water to boil an egg. According to the present invention eggs can be prepared in a fast way simply by using an appropriate covering and a microwave oven.

In a preferred embodiment the step of heating the egg comprises heating the egg at a first power level during a first time period and subsequently heating the egg at a second power level during a second time period, the second power level being lower than the first power level. In the first step one makes sure that the covering is rapidly heated in a first stage, while in the second step the egg is rapidly heated and cooked in two ways without risk for explosion of the shell. This provides a fast manner of preparing the eggs.

In another preferred embodiment the egg is heated during a time period of 60-120 seconds. The time period have appeared sufficiently long to prepare the eggs.

The present invention also relates to a package for cooking eggs in a microwave oven comprising a covering that is adapted to surround an egg, which covering is arranged to partially transmit microwave radiation and partially absorb microwave radiation. Such a package has appeared to be very efficient for a swift preparation of eggs in a microwave oven.

In a preferred embodiment the covering comprises a first component and a second component, wherein at least the second component partially transmits microwave radiation and partially absorbs microwave radiation. The advantage of using two components is that one has more engineering possibilities for obtaining a covering with the required properties. A component that partially transmits and partially absorbs microwave radiation in most cases will be a liquid, such as water or an aqueous solution. The first component can then advantageously be used for containing the liquid second component.

When applying two components it is especially preferred if the second component forms an inner layer surrounding the shell of the egg and the first component forms an outer layer surrounding the second component. This provides a simple yet effective design.

Alternatively the first component forms a matrix material, which contains the second component. As an example one can think of a porous first component, wherein the pores contain a suitable liquid. The first component in both aforementioned embodiments can be any suitable solid material, such as a polymeric material or a ceramic material.

Furthermore the present invention relates to an egg provided with a package as described above and to a microwave oven that is arranged to cook an egg.

Current microwave ovens do not have such possibilities. Even more so, in their manuals it is often stated that the oven is not suited to prepare a boiled egg in view of the risk for exploding eggs. The present invention enables to use a microwave oven for cooking eggs in a relatively simple and fast manner.

### BRIEF DESCRIPTION OF THE DRAWINGS

Embodiments of the present invention will now be described by way of example and with reference to the accompanying drawings in which:
Fig. 1 is a schematic cross-section of a package for cooking eggs in a microwave;
Fig. 2 is a schematic side-view of a microwave.

### DETAILED DESCRIPTION OF EMBODIMENTS

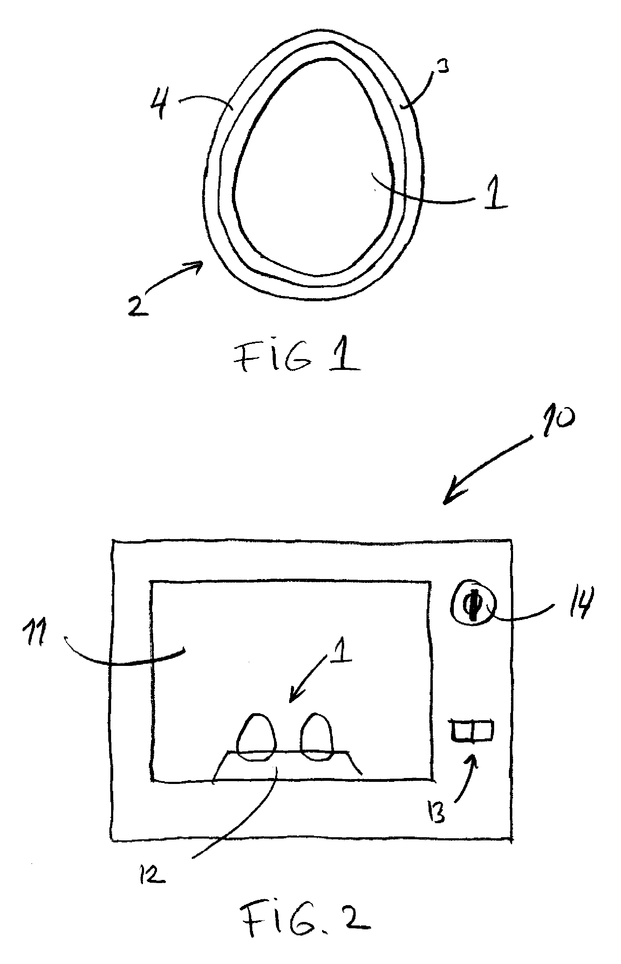

Figure 1 shows an egg 1 provided with a package. The package comprises a covering 2. Preferably the covering substantially covers the shell of the egg completely. With 'substantially covering completely' here it is meant that the covering for the larger party covers the shell surface. However as explained in more detail below it can be advantageous to have a covering that is provided with small openings.

The covering 2 comprises a first component 3 and a second component 4. The second component forms a layer adjacent to the shell surface while the first component forms an outer layer adjacent to the inner layer. The second component partially transmits microwave radiation and partially absorbs microwave radiation. The second component preferably is a liquid. It is also possible to use more layers made of more than two components.

Alternatively (not shown) one uses a cover that has a first component made from a porous material wherein the second component is contained in the pores. One can use for example a sponge-like material for this.

As stated before the second component normally will be a liquid. In that case it is preferred if the first component comprises openings that enable to release steam or vapor from the covering.

A liquid that obviously is very well suited is water. Preferably one dissolves a substance in the water that influences the ratio between the transmittal and absorption of microwaves. A typical example of such a substance is salt.

Figure 2 shows a microwave oven 10 having a transparent front door 11 for viewing the food. In the food compartment of the microwave preferably a standard 12 is provided that is adapted to held one or more eggs. The standard can easily be placed or removed from the microwave oven.

Furthermore the microwave oven comprises control knobs 13 for controlling the operation of the microwave. A selection switch 14 enables to choose between several standard programs for preparing special food items. One standard program is that for preparing an egg having a package according to the present invention. Preferably one can select both a program for obtaining soft-boiled eggs and a program for obtaining hard-boiled eggs. It has appeared advantageous when the program comprises heating the egg at a first power level during a first time period and subsequently heating the egg at a second power level during a second time period, the second power level being lower than the first power level. Typical heating times are between 60-120 seconds. Below an experiment is described in more detail. The covering of the eggs is not shown in Figure 2.

With 'covering' here any element that can surround an egg is meant. Although it will cover the egg' shell for the larger part it does not necessarily have to cover the egg surface completely and does not have to be shaped exactly like an egg. The shape and dimensions are such that the heating of the covering by microwaves, which heating results in the heating off the egg through heat conduction, is done in an efficient way while preventing any power losses as much as possible.

Experiments have been done to obtain a soft-boiled egg in a microwave oven. An egg is considered soft-boiled when the white is solidified but still rather soft while the egg yoke is liquid to semi-liquid. A medium-size egg was wrapped in tissue and soaked in 20ml 0.5M (mol/l) sodium chloride (NaCl) solution. It should be noted that the microwave absorption of saline solutions and temperature dependence thereof are strongly related to the concentration of the solution. A rubber material was used for packaging. The package was placed in a regular commercial microwave oven and subjected to the following heating program: 60s at 800W followed by 20s at 560W. This experiment was nicely reproducible and resulted in properly soft-boiled eggs.

In radiative heat transfer, energy is carried from one material to the other by photons (electromagnetic radiation). As no medium is involved in the transport, radiation is the only means of heat transfer through a vacuum, e.g., from the sun to the earth. Whenever electromagnetic radiation is emitted and then absorbed, heat is transferred. In the mid-1940's, Percy Spencer of Raytheon discovered that radiation in the microwave range of the spectrum (~1-~100GHz) is particularly effective in heating water-containing foodstuffs. Energy is absorbed, because the water dipole attempts to continuously reorient in electromagnetic radiation's oscillating electric field. Depending on the frequency, the dipole may move in time to the field, lag behind it or remain apparently unaffected. When the dipole lags behind the field then interactions between the dipole and the field lead to an energy loss by heating. In commercial microwaves, frequencies of 2.45GHz (wavelength: 12cm) are almost exclusively used. This choice is a compromise between maximizing the absorption coefficient and maintaining sufficient penetration depth. Due to the penetration of the microwaves (3-5 cm's), foodstuffs are heated throughout. As one no longer depends on heat conduction rates, very rapid heating can be achieved. It was observed that cooking of eggs can be properly done in a microwave oven if one directly heats the liquid of the eggs by microwave radiation while at the same time the eggs are indirectly heated by heat conduction. This can be obtained by providing a suitable covering for covering the egg, which covering partially transmits microwave radiation with relation of the direct heating and partially absorbs microwave radiation with relation to the indirect heating.

By adding salt to water the interaction of the dipoles changes and thus the absorption of the microwaves changes. The absorption coefficient also changes with increasing temperatures. At higher temperatures the absorption increases. Giving these relations one can find an optimum concentration for a solution used in the covering for a certain microwave program.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the figures and the description, such illustration and description are to be considered illustrative or exemplary only, and not restrictive. The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. For example one can apply a porous first component as an outer layer, while the second component is contained both in an inner layer adjacent to the shell and in the pores of the first component. Any reference signs in the claims should not be construed as limiting the scope of the present invention.

The invention relates to a method and package for cooking eggs in a microwave oven in a fast and simple manner. To this end one provides at least one egg with a covering surrounding the egg, which covering partially transmits and partially absorbs microwave radiation. Preferably the covering comprises a first component and a second component, wherein the second component partially transmits microwave radiation and partially absorbs microwave radiation.

## Claims

1. Method for cooking eggs in a microwave oven comprising;
- providing at least one egg with a covering surrounding the egg, which covering partially transmits microwave radiation and partially absorbs microwave radiation;
- accommodating the egg in a microwave oven;
- heating the egg by means of the combined action of transmitted microwaves and heat conduction by the covering.

2. Method according to claim 1, wherein the step of heating the egg comprises heating the egg at a first power level during a first time period and subsequently heating the egg at a second power level during a second time period, the second power level being lower than the first power level.

3. Method according to claim 1, wherein the egg is heated during a time period of 60-120 seconds.

4. Package for cooking eggs in a microwave oven comprising a covering that is adapted to surround an egg, which covering is arranged to partially transmit microwave radiation and partially absorb microwave radiation.

5. Package according to claim 4, wherein the covering comprises a first component and a second component, wherein the second component partially transmits microwave radiation and partially absorbs microwave radiation.

6. Package according to claim 5, wherein the second component forms an inner layer surrounding the shell of the egg and the first component forms an outer layer surrounding the second component.

7. Package according to claim 5, wherein the first component forms a matrix material containing the second component.

8. Package according to claim 4, wherein the package is disposable.

9. Egg provided with a package according to any of the claims 4-8.

10. Microwave oven that is arranged to cook an egg according to claims 1-3.
